# EUROPEAN PATENT APPLICATION

(11) **EP 3 079 439 A1**
(43) Date of publication of application: **12.10.2016**
(21) Application number: 15305527.2
(22) Date of filing: 10.04.2015
(51) Int. Cl.: H04W 88/06

(54) **A METHOD IN A WIRELESS TELECOMMUNICATION NETWORK, A USER EQUIPMENT DEVICE AND A NETWORK NODE**

(71) Applicant: ALCATEL LUCENT, 92100 Boulogne-Billancourt (FR)
(72) Inventor: Lim, Seau Sian, Swindon, Wiltshire SN5 7DJ (GB); Worrall, Chandrika, Swindon, SN5 7DJ (GB)
(74) Representative: Bryers LLP

(57) **Abstract**

A method, in a wireless telecommunication network in which a proportion of data to be transmitted via an uplink bearer between a user equipment, UE, device and a base station node of the network with which the UE device is communicatively coupled is split according to a predefined offload ratio determined by the node so as to enable uplink data offloading from the UE to a wireless local area network, WLAN, the method comprising determining, at the UE, proportion of uplink data packets successfully delivered using the wireless local area network or determining, at the UE, proportion of uplink data packets unsuccessfully delivered using the wireless local area network and transmitting offload data representing the determined proportion to the base station node.

## Description

### TECHNICAL FIELD

Aspects relate, in general, to a method in a wireless telecommunication network, a user equipment device and a network node, and more particularly, although not exclusively, to determining the amount of data successfully or unsuccessfully offloaded using a wireless access point.

### BACKGROUND

Wireless telecommunication systems are capable of providing communication content for user equipment (UE) devices such as mobile devices for example. Such content can include voice, video, packet data, messaging, broadcast, and so on. These systems may be multiple-access systems capable of supporting communication with multiple users by sharing the available system resources (e.g., time, frequency, and power).

A wireless multiple-access communications system will typically include a number of base station nodes, such as evolved node B's (eNBs) for example, each of which is capable of simultaneously supporting communication for multiple UE devices. The base station nodes communicate with mobile devices on downlinks, in which there is provided a communication link from an eNB or other base station to user equipment (UE), and on uplinks in which there is provided a communication link from the UE to the eNB or other base station. Each base station has a coverage range, which may be referred to as the coverage area of the cell.

Traffic to and from a UE and the core network of the system may be offloaded using a wireless local area network (WLAN), which is a non-cellular wireless network such as a wireless network conforming to the IEEE 802.I I ("Wi-Fi") family of standards for example. Typically, because communication with a WLAN node, such as a WiFi hotspot for example, is contention based, there is no guarantee that data to be offloaded has been successfully delivered via the node.

### SUMMARY

According to an example, there is provided a method, in a wireless telecommunication network in which a proportion of data to be transmitted via an uplink bearer between a user equipment, UE, device and a base station node of the network with which the UE device is communicatively coupled is split according to a predefined offload ratio determined by the node so as to enable uplink data offloading from the UE to a wireless local area network, WLAN, the method comprising determining, at the UE, the proportion of uplink data packets successfully delivered using the wireless local area network or determining, at the UE, the proportion of uplink data packets unsuccessfully delivered using the wireless local area network, and transmitting offload data representing the determined proportion to the base station node. The offload data can be transmitted to the base station node as a standalone message or as part of a message indicating the proportion of data transmitted in the uplink to the base station node. The predefined ratio can be determined by the base station node specifies the proportion of uplink traffic to be offloaded from the UE using the wireless local area network. The method can further comprise determining, in wireless module of the UE, whether there has been successful or otherwise delivery of a data packet over the WLAN, and provide an indication to a packet data convergence protocol, PDCP, layer of the UE. The determination can be made in a TCP layer of the wireless module. The offload ratio can be modified to increase or decrease the proportion of data packets to be offloaded using the WLAN in response to the offload data. For example, if the offload data indicates that a proportion of offloaded data that is less than a predefined threshold value has been successfully delivered, the offload ratio can be modified to reduce the amount of data to be offloaded using the WLAN. A modified offload ratio can be communicated to the UE from the base station node as part of a radio resource control, RRC, reconfiguration message. The offload data can be transmitted to the base station node using a RRC message from the UE or using an uplink PDCP status report message from the UE.

According to an example, there is provided user equipment operable to be communicatively coupled with a base station node in a wireless telecommunication network in which a proportion of data to be transmitted via an uplink bearer between the UE and the base station node is split according to a predefined offload ratio determined by the node so as to enable uplink data offloading from the UE to a wireless local area network, WLAN, wherein the UE is operable to determine the proportion of uplink data packets successfully delivered using the wireless local area network or determine the proportion of uplink data packets that are not successfully delivered using the wireless local area network, and transmit offload data representing the determined proportion to the base station node. The UE can transmit the offload data to the base station node as a standalone message or as part of a message indicating the proportion of data transmitted in the uplink to the base station node. The UE can determine, in wireless module, whether there has been successful or otherwise delivery of a data packet over the WLAN, and provide an indication to a packet data convergence protocol, PDCP, layer of the UE. The determination can be made in a TCP layer of the wireless module. The UE can transmit the offload data to the base station node using a RRC message. The UE can transmit the offload data to the base station node using an uplink PDCP status report message.

According to an example, there is provided a base station node in a wireless telecommunication network operable to be communicatively coupled with a user equipment device in which a proportion of data to be transmitted via an uplink bearer between the UE and the base station node is split according to a predefined offload ratio determined by the node so as to enable uplink data offloading from the UE to a wireless local area network, WLAN, wherein the node is operable to receive offload data representing a determined proportion of uplink data packets successfully delivered using the wireless local area network or a determined proportion of uplink data packets that were not successfully delivered using the wireless local area network. The node can modify the offload ratio to increase or decrease the proportion of data packets to be offloaded using the WLAN.

### BRIEF DESCRIPTION OF THE DRAWINGS

Embodiments will now be described, by way of example only, with reference to the accompanying drawings, in which:
Figure 1 is a schematic representation of a wireless communications system according to an example;
Figure 2 is a schematic representation of a signaling flow between a UE, node and WLAN access point according to an example; and
Figure 3 is a schematic representation of a protocol stack in a UE and node according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein. As used herein, the term "bearer" refers to a link between two nodes or entities in a communication network.

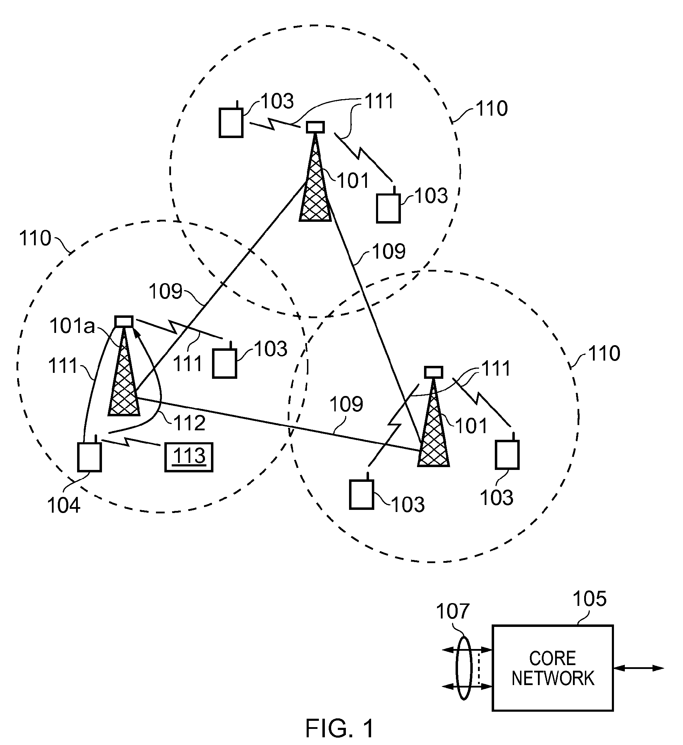

Figure 1 is a schematic representation of a wireless communications system according to an example. System 100 includes base station nodes, such as eNBs, 101, user equipment (UEs) 103, and a core network portion 105. The base station nodes 101 can communicate with the UEs 103 under the control of a base station controller (not shown), which may be part of the core network 105 or the nodes 101. Nodes 101 communicate control information and/or user data with the core network 105 through core network backhaul links 107 (e.g., S1 interface, etc.). Nodes 101 can communicate, either directly or indirectly, with each other over inter-base station backhaul links 109 (e.g., X2 interface, etc.), which may be wired or wireless communication links.

Typically, UEs 103 are dispersed throughout cells 110 of the 100, and each UE may be stationary or mobile. Communication links I I I between UEs 103 and nodes 101 include uplink (UL) transmissions from a UE to a node, and/or downlink (DL) transmissions from a node to a UE as is typical.

According to an example, a UE 104 can communicate with a node 101a and a wireless local area network (WLAN) access point 113. Accordingly, node 101 can steer, divert or offload data transmissions from UE 104 to node 113 to increase bandwidth, manage loading, or optimize resource utilization of the node 101 for example. Uplink and/or downlink communications between the UE 104 and the node 101 can be offloaded to node 113. That is, UL/DL bearer offloading can be provided, and a bearer split can be implemented such that a proportion of data packets to/from UE 104 are offloaded. Any packets not offloaded to/from a WLAN access point can be communicated as normal via a node 101 of the system 100.

In an example, in the case of a DL bearer split, the eNB 101 makes the DL bearer split decision. That is, the node 101 decides whether data should be offloaded and specifies the ratio of offloading to node 113 by taking into consideration radio quality and load conditions of the radio and WLAN networks, as well as flow control feedback (e.g. based on PDCP Status reports on which PDCP PDUs are successfully delivered and so on). For example, the node may compare the radio quality and load condition data to certain metrics used to map such measures to bearer split ratios. For example, a high load on the node and a good radio condition indication between a UE and a WLAN access point can map to a relatively high bearer split ratio, such as a 75-85% traffic offload to the access point. Conversely, a poor radio condition can map to a relatively lower bearer split ratio, such as 0-30% for example. Other alternatives are possible as will be appreciated, and the methodology and execution of a bearer split is well known, and is not therefore discussed further.

In the case of an UL bearer split, the eNB 101 also makes the same decision as in the UL bearer split case by taking into consideration of the radio and load condition of the radio and WLAN networks before providing a bearer split offload ratio to the UE 104. On the radio access network side, the UE 104 can report an UL grant request (i.e. the Buffer Status Report) to the eNB 101 to request an UL grant. However, in terms of offload to the WLAN, access is contention based and there is therefore no guarantee that data according to the predefined offload can be successfully delivered over the WLAN link. Accordingly, the UL bearer split proportion might not be fulfilled by the UE over the WLAN portion and the eNB 101 will therefore need to know this in order to be able to adjust the offloading proportion between the radio and WLAN networks.

Therefore, according to an example, in a wireless telecommunication network in which a proportion of data to be transmitted via an uplink bearer between a user equipment device and a core network portion of the network can be split according to a predefined offload ratio determined by a node of the network with which the UE device is communicatively coupled, so as to enable uplink data offloading from the UE using a wireless local area network. The UE determines the proportion of uplink data packets that are successfully delivered or the proportion of uplink data packets that are unsuccessfully delivered to the core network portion using the wireless local area network, and can transmit offload data representing the determined proportion to the node. The node can then modify the offload ratio to increase or decrease the proportion of data packets to be offloaded using the wireless local area network in response to the offload data.

The proportion of uplink data packets that are successfully delivered represents the number of successfully delivered packets from the total number of packets transmitted, whereas the proportion that are not successfully delivered represents the number of unsuccessfully delivered packets from the total number of packets transmitted. In an example, a proportion can be determined periodically, taking into account the number of packets transmitted within a predetermined window of time. Alternatively, the proportion can be continuously updated on a packet by packet basis for example.

For example, if the UE attempts to offload 100 data packets to a WLAN AP, and it is determined that 83 packets were successfully delivered, the proportion of successfully delivered packets is 83%. Alternatively for example, if the UE attempts to offload 100 data packets to a WLAN AP, and it is determined that 37 packets were not successfully delivered, the proportion of unsuccessfully delivered packets is 37%, and so on.

If, for example, within time t, 1000 packets are offloaded from a UE to a WLAN AP, with 200 of these packets transmitted within a predefined window of time t1 wherein t1 < t, and wherein 180 of the packets are successfully delivered, the proportion successfully delivered within the window t I is 90%. Times t and t1 can be selected as desired such that the proportion can be periodically sampled to provide snapshots of offloading success or failure.

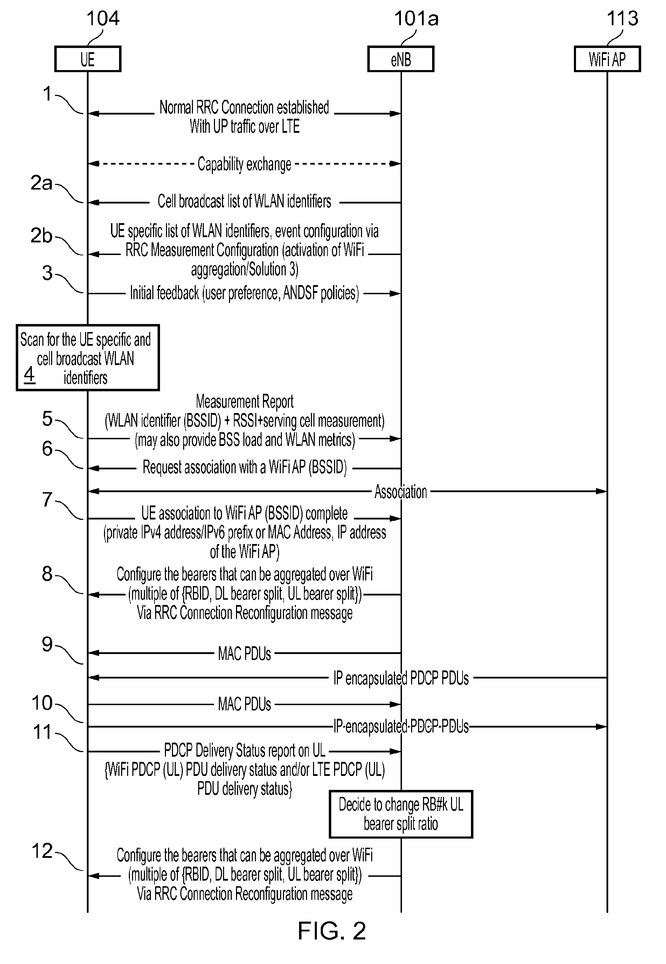

Figure 2 is a schematic representation of a signaling flow between a UE, node and WLAN access point according to an example. User equipment 104 is operable to be communicatively coupled with a base station node 101a in a wireless telecommunication network, such as network 100. A proportion of data to be transmitted via an uplink bearer 112 between the UE 104 and the base station node 101a can be split or distributed according to a predefined offload ratio that can be determined by the node 101a so as to enable uplink data offloading from the UE 104 to a wireless local area network, WLAN, 113. As is generally typical, an RRC connection I is established between the UE 104 and the node 101a, which can be an eNodeB (eNB) in an LTE network for example, with uplink (UL) traffic over the communications network. There is a capability exchange between the UE 104 and the eNB 101a, and if it is determined that the UE 104 can support data offloading to a WLAN access point 113, a list of WLAN identifiers is broadcast to the UE 104 from the eNB 101a at 2a. Alternatively or additionally, a UE specific list of WLAN identifiers can be transmitted to UE 104 from eNB 101a at 2b. The UE 104 can provide initial feedback including user preferences and ANDSF policy data for example, to the eNB 101a at 3.

The UE 104 can scan for accessible WLAN using the UE specific and/or cell broadcast WLAN identifiers received from the eNB 101a at 4. For example, the UE 104 can determine if there are any WLANs that are within range of the UE 104 and with which it may communicate for the transmission and/or reception of data. A measurement report can be transmitted from the UE 104 to the ENB 101a at 5, in which the UE communicates information to the eNB 101a such as a WLAN identifier (BSSID) and received signal strength indicator (RSSI) and serving cell measurement data. Optionally, the UE 104 can provide data representing a BSS load and WLAN metrics for example. The eNB 101a can transmit a request message to the UE 104 at 6 in order to request that the UE 104 associate with a WLAN access point (AP). For example, the eNB 101a can use the measurement report data from the UE 104 to determine that the UE 104 can connect to an AP 113 in order to offload data to the AP. For example, as is known, the UE 104 can reroute cellular network traffic through a WLAN and/or transmit IP data to/from the core network through the AP.

Once the UE 104 association with the WLAN AP 113 is completed at 7, the eNB 101a can configure bearers that can be aggregated over the AP 113, which can be communicated to the UE 104 using a RRC connection reconfiguration message. For example, the eNB 101a can communicate to the UE the proportion of data in the uplink and/or downlink from the UE 104 that can be sent via the AP 113. Accordingly, MAC protocol data units (PDUs) and IP encapsulated PDCP PDUs can be transmitted to and from the eNB 101a and the AP 113 to/from the UE 104 at 9/10.

According to an example, the UE 104 can determine the number of uplink data packets successfully or unsuccessfully delivered using the WLAN AP 113 and can transmit offload data representing the determined number to the eNB at 11. For example a PDCP delivery status report on the UL can be sent from the UE 104 to the eNB 101a. The eNB 101a can use the offload data in order to determine of the bearer split ratio should be modified. That is, the eNB 101 a can determine if a proportion of data transmitted over the AP 113 greater than a predefined threshold value was successfully relayed. If not, the eNB 101a can modify the bearer split in order to reduce the proportion of data to be transmitted over the AP 113. For example, if less than 85% of data has been successfully transmitted via AP 113 (i.e. 15% is not successfully transmitted), the eNB 101a can reduce the proportion of data to be sent from UE 104 via AP 113 by a predetermined amount, such as 50% for example. Alternatively, if the amount successfully transmitted is less than, say, 15-30%, the eNB 101a can modify the bearer split such that no data is transmitted via AP 113. The eNB 101a communicates a modified bearer split ratio at 12.

If the offload data received by eNB 101a indicate that all data has been successfully transmitted/offloaded via AP 113, the eNB 101a can modify the bearer split in order to increase the proportion of traffic sent from UE 104 via AP 113. This process can be repeated such that the bearer split ratio between eNB 101a and AP 113 is modified as desired on a periodic basis depending on the offload data received from the UE 104 representing the proportion of data that is successfully offloaded to AP 113.

According to an example, the amount/proportion of UL PDCP PDUs that are successfully (or unsuccessfully) delivered via a WLAN AP can therefore be determined and signaled to an eNB by the UE.

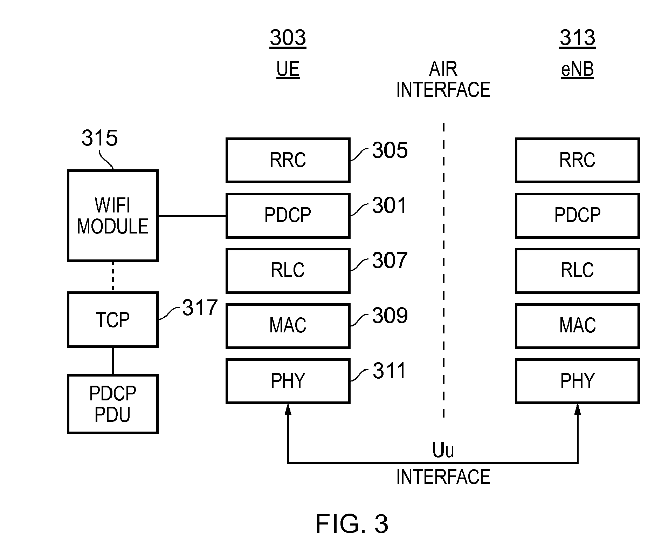

Figure 3 is a schematic representation of a protocol stack in a UE and node according to an example. A PDCP layer 301 in the user plane protocol stack of UE 303 performs sequence number addition, handover data handling, integrity protection, ciphering and header compression and so on, as is known. Other layers of the stack include the RRC layer 305, RLC layer 307, MAC layer 309 and PHY layer 311. Similar layers are provided in the eNB 313.

To determine the amount of UL PDCP PDUs that are successfully (or unsuccessfully) delivered, a WiFi module 315 in the UE 303 can determine whether a PDCP PDU is successfully delivered (or not). If it is not it can inform the PDCP layer 301 that a packet is not successfully delivered and vice versa. In an example, this can be achieved by having a TCP layer 317 in the WiFi module 315 for example. Whenever TCP successfully or unsuccessfully delivers a PDCP PDU, it can inform the PDCP layer 301.

Upon receiving the information from the WiFi module 315, the UE 303 can report the success rate or failure rate to the eNB 313. The eNB 313 can use this report to adjust the LTE-WiFi offload ratio accordingly. In an example, one possibility is to report such a success or failure rate of transmission over WiFi for a bearer via an RRC message to the eNB 313. Another possibility is to report such a success or failure rate of transmission over WiFi for a bearer as a UL PDCP Status report (PDCP delivery attempt status) by the PDCP entity of the bearer and report it to the peer layer. The peer layer can inform the RRC as part of the decision making to adjust the LTE-WiFi offloading ratio for the UL bearer split.

In terms of reporting at the PDCP layer, the PDCP delivery attempt status can be provided to the eNB by the UE for WiFI and LTE separately. Alternatively, the UE can provide the PDCP delivery attempt status to the eNB in one message, and in addition the message can indicate to which path the packet delivery was attempted. This information can directly be used in computing the appropriate offloading ratio. Accordingly, with reference to figure 2, in which the signaling flow between a UE 303, 104, eNB 313, 101 and WLAN AP 113 is shown, the UL PDCP PDU delivery status at 11 can be sent as an RRC message or a PDCP Status report. Based on this report, the eNB 313, 101 can adjust the UL bearer split ratio and provide it to the UE 303, 104 as shown in 12.

Accordingly, the eNB can determine whether the UE can perform the UL bearer split as intended by the eNB and can adjust the UL bearer split ratio accordingly based on the report from the UE.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a wireless telecommunication network in which a proportion of data to be transmitted via an uplink bearer between a user equipment, UE, device and a base station node of the network with which the UE device is communicatively coupled is split according to a predefined offload ratio determined by the node so as to enable uplink data offloading from the UE to a wireless local area network, WLAN, the method comprising:
determining, at the UE, proportion of uplink data packets successfully delivered using the wireless local area network or determining, at the UE, proportion of uplink data packets unsuccessfully delivered using the wireless local area network; and
transmitting offload data representing the determined proportion to the base station node.

2. A method as claimed in claim 1, wherein the offload data is transmitted to the base station node as a standalone message or as part of a message indicating the proportion of data transmitted in the uplink to the base station node.

3. A method as claimed in claim 1 or 2, wherein the predefined ratio determined by the base station node specifies the proportion of uplink traffic to be offloaded from the UE using the wireless local area network.

4. A method as claimed in any preceding claim further comprising:
determining, in wireless module of the UE, whether there has been successful or otherwise delivery of a data packet over the WLAN; and
providing an indication to a packet data convergence protocol, PDCP, layer of the UE.

5. A method as claimed in any preceding claim, further comprising:
modifying the offload ratio to increase or decrease the proportion of data packets to be offloaded using the WLAN in response to the offload data.

6. A method as claimed in claim 5, wherein a modified offload ratio is communicated to the UE from the base station node as part of a radio resource control, RRC, reconfiguration message.

7. A method as claimed in any preceding claim, wherein the offload data is transmitted to the base station node using a RRC message from the UE.

8. A method as claimed in any of claims 1 to 6, wherein the offload data is transmitted to the base station node using an uplink PDCP status report message from the UE.

9. User equipment operable to be communicatively coupled with a base station node in a wireless telecommunication network in which a proportion of data to be transmitted via an uplink bearer between the UE and the base station node is split according to a predefined offload ratio determined by the node so as to enable uplink data offloading from the UE to a wireless local area network, WLAN, wherein the UE is operable to:
determine proportion of uplink data packets successfully delivered using the wireless local area network or determine proportion of uplink data packets that are not successfully delivered using the wireless local area network; and
transmit offload data representing the determined proportion to the base station node.

10. User equipment as claimed in claim 9, wherein the UE is operable to transmit the offload data to the base station node as a standalone message or as part of a message indicating the proportion of data transmitted in the uplink to the base station node.

11. User equipment as claimed in claim 9 or 10, wherein the UE is operable to:
determine, in wireless module, whether there has been successful or otherwise delivery of a data packet over the WLAN; and
provide an indication to a packet data convergence protocol, PDCP, layer of the UE.

12. User equipment as claimed in any of claims 9 to 11, wherein the UE is operable to transmit the offload data to the base station node using a RRC message.

13. User equipment as claimed in any of claims 9 to 11, wherein the UE is operable to transmit the offload data to the base station node using an uplink PDCP status report message.

14. A base station node in a wireless telecommunication network operable to be communicatively coupled with a user equipment device in which a proportion of data to be transmitted via an uplink bearer between the UE and the base station node is split according to a predefined offload ratio determined by the node so as to enable uplink data offloading from the UE to a wireless local area network, WLAN, wherein the node is operable to:
receive offload data representing a determined proportion of uplink data packets successfully delivered using the wireless local area network or a determined proportion of uplink data packets that were not successfully delivered using the wireless local area network.

15. A base station node as claimed in claim 14, wherein the node is operable to modify the offload ratio to increase or decrease the proportion of data packets to be offloaded using the WLAN.
